(19)

Europäisches
Patentamt
European
Patent Office
Office européen
des brevets

(11) **EP 2 434 446 A1**

(12) **EUROPEAN PATENT APPLICATION**

(43) Date of publication:
**28.03.2012 Bulletin 2012/13**

(51) Int Cl.:
***G06Q 30/00*** (2012.01)

(21) Application number: **11179757.7**

(22) Date of filing: **01.09.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **27.09.2010 US 386904 P**

(71) Applicant: **Research In Motion Limited
Waterloo, ON N2L 3W8 (CA)**

(72) Inventors:
 • **Oka, Anand Ravindra
  Waterloo Ontario N2L 3W8 (CA)**
 • **Snow, Christopher Harris
  Waterloo Ontario N2L 3W8 (CA)**
 • **Simmons, Sean Bartholomew
  Waterloo Ontario N2L 3W8 (CA)**

(74) Representative: **Greenaway, Martin William et al
Kilburn & Strode LLP
20 Red Lion Street
London WC1R 4PJ (GB)**

(54) **Communications system for generating recommendations and related methods**

(57)    A communications system may include an electronic device associated with a given user, and a communications network. The communications system may also include a modeling server configured to communicate with the electronic device via the communications network. The modeling server may also be configured to generate a purchase probability distribution using a statistical model based upon prior purchase information for the given user and prior purchase information for a plurality of other users. The modeling server may also be configured to determine new purchase recommendations for the given user using the purchase probability distribution, and provide the new purchase recommendations to the electronic device.

EP 2 434 446 A1

**Description**

**Related Application**

This application is based upon previously filed copending provisional application Serial No. 61/386,904 filed September 27, 2010, the entire subject matter of which is incorporated herein by reference in its entirety.

**Technical Field**

The present disclosure relates to the field of communications, and, more particularly, to statistical recommendation systems and related methods.

**Background**

A "top ten" recommendation list is relatively popular. For example, the top ten best-selling books, the top ten downloaded songs, the top ten downloaded applications, and the top ten news stories. An expurgated top ten list, which drops the previous purchases/downloads of a user from the list, may provide increasingly effective recommendations while being relatively simple.

However, collaborative filtering (CF) may be a dominantly popular recommendation technique that makes increasingly sophisticated use of prior purchase history of users of a marketplace. A standard CF methodology is linear algebraic, and is generally based upon a singular value decomposition (principal component analysis) of the purchase data.

**Brief Description of the Drawings**

FIG. 1 is a schematic diagram of a system in accordance with an example embodiment.

FIG. 2 is a table of users and items that may be stored in the database of the system of FIG. 1.

FIG. 3 is a flow chart of a distributed implementation of model identification in accordance with an example embodiment of the present invention.

FIGS. 4a-4c are performance comparison graphs using different statistical models for a given user with greater than 8 purchases.

FIGS. 5a-5c are performance comparison graphs using different statistical models for a given user with greater than 16 purchases.

FIGS. 6a-6c are performance comparison graphs using different statistical models for a given user with greater than 24 purchases.

FIG. 7 is a schematic block diagram illustrating additional components that may be included in the mobile wireless communications device of FIG. 1

**Detailed Description of the Preferred Embodiments**

The present description is made with reference to the accompanying drawings, in which various example embodiments are shown. However, many different example embodiments may be used, and thus the description should not be construed as limited to the example embodiments set forth herein. Rather, these example embodiments are provided so that this disclosure will be thorough and complete. Like numbers refer to like elements throughout.

In accordance with an example aspect, a communications system may include an electronic device associated with a given user, and a communications network, for example. The communications system may also include a modeling server configured to communicate with the electronic device via the communications network. The modeling server may also be configured to generate a purchase probability distribution using a statistical model based upon prior purchase information for the given user and prior purchase information for a plurality of other users, for example. The modeling server may also be configured to determine new purchase recommendations for the given user using the purchase probability distribution, and provide the new purchase recommendations to the electronic device. Accordingly, the communications system may provide more relevant new purchase recommendations to the given user.

The modeling server may include a plurality of parallel processors configured generate the purchase probability distribution using a statistical model, for example. The statistical model may include a statistical model having a factor order greater than or equal to two. In other words, the statistical model may have basis functions, i.e. factors, having a factor order greater than or equal to two, for example.

The modeling server may be configured to generate the purchase probability distribution based upon a Boltzmann model (i.e. Markov Random Field), for example. The modeling server may also be configured to generate the purchase probability distribution based upon an unrestricted Boltzmann model. In other words, a connectivity graph of the Boltzmann model may be unrestricted, and may include pair-wise interaction factors and higher order interaction factors.

The modeling server may be configured to retrieve prior purchase information for the given user as a random realization. The modeling server may also include a database configured to store the prior purchase information for the given user and the prior purchase information for a plurality of other users, for example.

The communications network may include a cellular communications network, for example. The electronic device may include a mobile wireless communications device, for example.

A method aspect is directed to a method of providing new purchase recommendations for a given user associated with an electronic device. The method may include using a modeling server configured to communicate with the electronic device via a communications network to at least generate a purchase probability distribution using a statistical model based upon prior purchase information for the given user and prior purchase information for a plurality of other users, and determine new purchase recommendations for the given user using the purchase probability distribution. The modeling server may further be used to provide the new purchase recommendations to the electronic device. Additionally, the functionality of the modeling server may be included as computer executable instructions included on a non-transitory computer-readable medium.

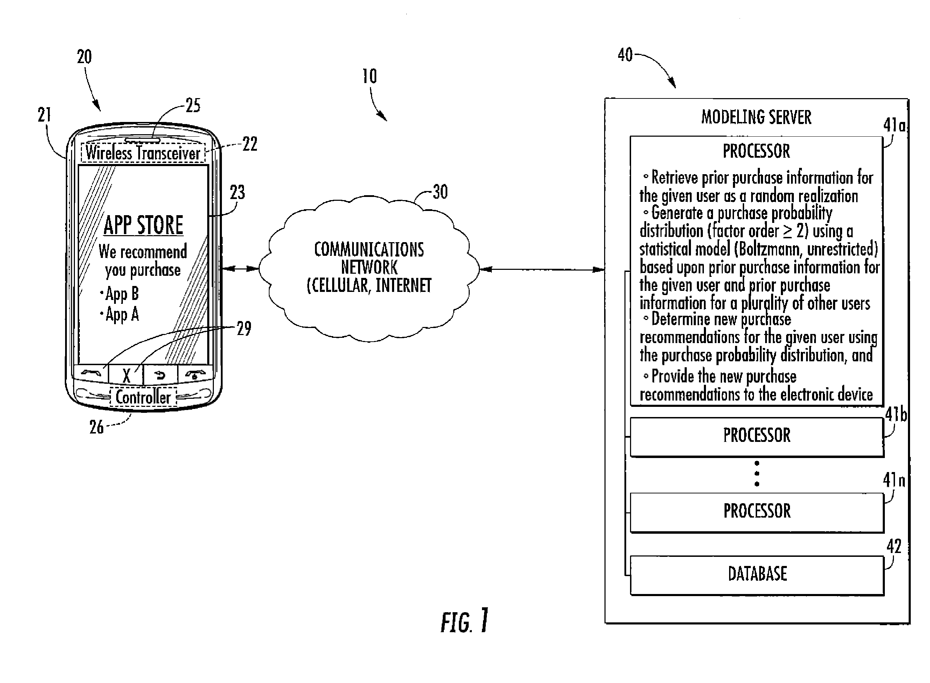

Referring initially to FIG. 1, a communications system **10** includes an electronic device **20** associated with a given user. The electronic device **20** illustratively is a mobile wireless communications device, such as, for example, a cellular telephone.

The mobile wireless communications device **20** illustratively includes a housing **21**, a wireless transceiver **22** carried by the housing, and a display **23** carried by the housing. The mobile wireless communications device **20** also illustratively includes an audio transducer **25** carried by the housing **21**. The audio transducer **25** may be a microphone, for example. The audio transducer **25** may also be a speaker. In some example embodiments, there may be more than one audio transducer **25**, for example, a microphone and speaker may be used and carried by the housing **21**.

The mobile wireless communications device **20** includes one or more input devices **29**. The input devices **29** illustratively include push buttons for cooperating with a controller **26** to selectively enable the speech conversion and proposed modification determination. In some example embodiments, the input device **29** may be an alphanumeric keypad or other input device for cooperating with the controller **26**, for example. Still further, an input device **29** may be coupled to the display **23** to accept a touching input therefrom, for example.

The controller **26** is also carried by the housing **21** and cooperates with the wireless transceiver **22** to perform at least one mobile wireless communications function. For example, the wireless transceiver **22** may be a cellular transceiver or a WiFi transceiver, for example, and may cooperate with the controller **26** to communicate data and/or voice communications. Other types of wireless transceivers and mobile wireless communications functions will be appreciated by those skilled in the art. The electronic device **20** may be another type of electronic device, for example, a personal computer (PC), which may be a shared or public PC, a personal digital assistant (PDA), a tablet PC, or other communications device, either shared or personal, and wired or wireless, as will be appreciated by those skilled in the art.

The communications system **10** also includes a communications network **30**. The communications network **30** may be wireless communications network, for example, a cellular communications network. The communications network **30** may be another type network, for example, an 802.11x network, or the Internet. The communications network **30** may also be a combination of networks, including, for example, wired and wireless networks.

The communications system **10** illustratively includes a modeling server **40**. The modeling server includes multiple processors **41a-41n**, or controllers, coupled in parallel. In some embodiments, the processors **41a-41n** may not be coupled in parallel, or the modeling server **40** may include a single processor. The modeling server **40**, by way of the processors **41a-41n**, is configured to communicate with the electronic device **20** via the communications network **30**. As will be appreciated by those skilled in the art, the modeling server **40** may not communicate directly with the electronic device **20**, but may communicate through one or more communications or proxy servers (not shown). For example the electronic device **20** may be a PC and connect to the modeling server **40** over the Internet via a web browser.

The modeling server **40** may be particularly advantageous for recommending new purchases at an online store, such as, for example, an online application store for the electronic device **20**. In particular, for example, as a statistical average over all users, a "top ten" recommendation list generally does not attempt to personalize a new purchase recommendation list for a given user. The modeling server **40** advantageously may recommend the "top ten" items in popularity after expurgating the items that the given user has already bought/seen, based upon a history of each user's prior purchases.

The modeling server **40** includes a database **42** that may store the prior purchase information for users. Additional information may be stored in the database **42**, as will be appreciated by those skilled in the art.

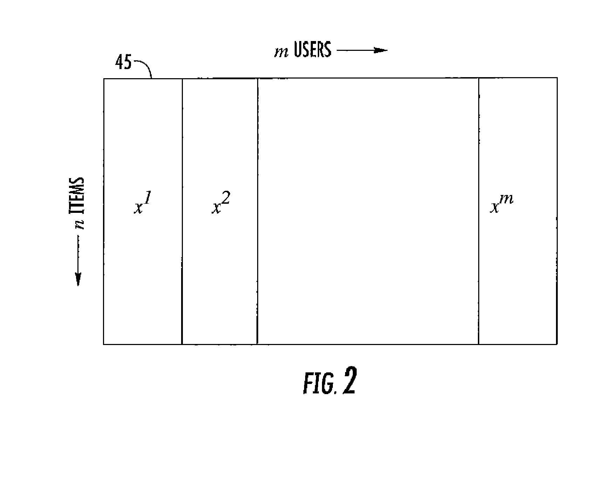

The functionality of the modeling server **40** will be described in further detail with references to FIGS. 2-3. Moreover, the functionality of the modeling server **40** may be shared among a plurality of servers (not shown).

The modeling server **40** is configured to generate a purchase probability distribution using a statistical model based upon prior purchase information for the given user and prior purchase information for other users. For example, referring to table **45**, a total of m users and n items may be in a marketplace, or in an online or application store (FIG. 2). For example, m = 50 million, and n = 13,000, and hence n « m. Indeed, data may be considered where n » m. An n x m matrix X includes entries from the set {+1,-1} and indicate user purchases. Thus, $X_{ij}$ = +1 indicates that user j, j = 1, 2, ... , m has previously purchased the item i, i = 1, 2, ... , n. $X_{ij}$ = -1 indicates otherwise.

Non-binary values may not be included in the matrix X, as this may cause the math to breakdown. Accordingly, a separate data structure or matrix R of the same dimensions as X may include reviews or "likes" of users for various items. The "likes" may be expressed as a real number where a relatively large positive value indicates a relatively strong liking, and a relatively large negative value indicates a relatively strong dislike. The matrix R may be used as a bias. As will be appreciated by those skilled in the art, a user may like an item, but may not have purchased that item. Moreover, data in the matrix X increases with time by adding new users (more columns) and new items (more rows) to the table **45** and consequently, the database **42**.

Given the data in matrix X and a particular purchase history x, which may or may not be a column of X, the modeling server **40** may advantageously deliver a list of L recommendations (i.e. a list of L item indices) based upon a prior purchase history x that may increasingly "fit" the prior purchase history of the given user.

The modeling server **40** advantageously considers each user's purchase history as a realization from a binary valued Markov Random Field, known as a Boltzmann model (a.k.a. an Ising model). In such models, the probability of a purchase realization, or a purchase of a particular product or service, is exponential with respect to an energy function of that purchase realization.

The Boltzmann Model, which is an instance of a Markov Random Field, is initially used. The columns of X are modeled as vectors drawn from $\{+1,-1\}^n$, according to an exponential distribution:

$$Q(x \mid \gamma) = \exp\{\gamma^T f(x) - \Psi(\gamma)\} \quad (1)$$

Where $y \in R^b$ is a parameter, and $f: \{+1,-1\}^n \to \{+1, -1\}^b$ is a column vector of basis functions. The constant term $\psi(_\gamma)$ in the exponent is for normalization and is independent of x. The vectors may be modeled to be drawn identically and independently from $\{+1,-1\}^n$.

The quantity $\psi(_\gamma)$ - $\theta^T x$ — $\frac{1}{2}x^T W x$ is viewed as the "energy" of configuration x, so configurations with a larger energy generally have a smaller probability. For example, the Boltzmann Model with linear and quadratic basis functions may be used as follows:

$$Q(x \mid \theta, W) = \exp\{\theta^T x + \frac{1}{2}x^T W x - \Psi(\theta, W)\} \quad (2)$$

Where $\theta \in R^n$, and $W \in R^{n \times n}$ symmetric with zero diagonal entries are the parameters of this model.

A first step is choosing a structure of the model based upon which basis functions to use. For example, the basis functions are initially restricted to linear and quadratic basis functions. W is a relatively very large matrix of about $10^8$ entries, and it may not be practical to work with so many parameters. Accordingly, W may be masked in some way. For example, an approach is to select a sparse mask M for W. That is, W is allowed to have only O(N) non-zero entries, at randomly chosen locations. Moreover, it may be particularly advantageous to choose the mask M with a more structured randomness. In particular, when choosing the non-zero locations, priority may be given to locations that involve popular items (e.g. items in the online stores, or applications in an application store). The popularity ratings of the items may be pre-computed. This may result increased average recommendation performance.

However, the above approach may also lead to "islands of disconnect" involving unpopular items. In other words, relatively unpopular items may not get recommended well by the model. This may not affect the average performance as much, but may cause inadequate performance when recommending for the "long tail" scenario, i.e. users who have a long purchase history and are now looking for the odd "off-beat" item that may be purchased by relatively few other people.

To address this problem, higher order basis functions may also be included. A higher order basis function may include a factor order greater than two, such as, for example, cubic, quaternary, etc. By including a relatively small number of such high order basis functions, the connectivity of the graph may be improved, and the "islands of disconnect" may be reduced. This may increase performance in an increased number of scenarios. Additionally, higher order basis functions may also allow for the reduction of the total number of parameters, b, to be estimated, which, in turn, may further improve performance by reducing the load on the processors **41a-41n**.

The second task is to estimate the model parameters. For clarity, the example of a model with linear and quadratic basis functions will be considered, while noting that the description applies equally to models with higher order basis functions.

The estimation of the parameter $\gamma = (\theta, W)$ may be performed by iterating the following two steps of the incremental-EM algorithm until convergence, where each iteration processes one column x of X:

$$\theta \leftarrow \theta + \epsilon \ (x - E[Z|\theta, W]) \quad (3)$$

$$W \leftarrow W + \epsilon M \circ (xx^T - E[ZZ^T|\theta, W]) \quad (4)$$

where Z is a placeholder, E[ · | $\theta$,W] denotes an expectation under the model Q (x|$\theta$,W) , and € a suitable small step-size. Indeed, it may be infeasible to calculate the expectations E [·|$\theta$,W], since it may be an exponentially difficult problem in terms of n.

Instead, a Gibbs-Sampling approximation approach may be used. In other words, a Markov-Chain Monte Carlo (MCMC) may be configured whose stationary distribution is Q (x|$\theta$,W), and then perform transitions of this chain to thus obtain a sufficiently large sample set. Empirical averages may be performed over the sample set. For improved accuracy estimates of the expectation, a relatively large sample set may be desired, which may lead to increased computational complexity.

However, when there is an increased amount of data (i.e. X has a very large number of columns), matters may be simplified by using one MCMC sample, making one transition per column and using this as the estimate of the mean. This sample may be retained as the initial state for making the MCMC draw in the next iteration of the estimator, and so on. Since € is relatively small, the parameter may not change much during the processing of a large number of columns of X, and thus, an increased amount of samples may be drawn from the MCMC of approximately the same distribution. Such algorithms may be referred to as doubly stochastic. Thus, the following resulting algorithm may be iterated over the successive columns x of X, starting from some initial state $\alpha$ € $\{+1,-1\}^n$:

$$\theta \leftarrow \theta + W\alpha \quad (5)$$

$$\alpha \leftarrow Bernoulli(\exp(\hat{\theta})/(\exp(\hat{\theta}) + \exp(-\hat{\theta}))) \quad (6)$$

$$\theta \leftarrow \theta + \epsilon \ (x - \alpha) \quad (7)$$

$$W \leftarrow W + \epsilon M \circ (xx^T - \alpha\alpha^T) \quad (8)$$

where Bernoulli(p) is a random vector in $\{+1,-1\}^n$ whose elements are drawn independently with Pr(+1) given by vector p.

Given a user preference vector x, which may be a column from X or may be a new user, for example, and given the estimated parameters $\theta$,W, x may be completed by moving it to a local maxima of the probability measure Q (x|$\theta$, W). Based upon Gibbs Sampling, this may be achieved by:

$$r = \theta + Wx \quad (9)$$

Where r represents the a-posteriori log-probability of purchase of items by the given user. The list of L recommendations may then be obtained by sorting r in a descending order and selecting indices corresponding to the top L entries, the new purchase recommendations for the given user.

In other words, the modeling server **40** determines new purchase recommendations for the given user using the purchase probability distribution. It should be noted that the new purchase recommendations account for the popularity of individual items via the bias $\theta$, and the interdependencies between the various items via W. A somewhat more elaborate recommendation technique may include computing the following "mean-field" recursion until convergence, starting from the initial condition r = 0:

$$r \leftarrow \tanh(\theta + \alpha + Wr) \qquad (10)$$

where $\alpha_i$ = L when $x_i$ = +1, and $\alpha_i$ = 0 where L is a relatively large number, for example, L = 100. The mean-field technique may give a relatively small improvement over the technique described above with respect to equation (9), and thus may be considered optional.

The modeling server **40** is also configured to provide the new purchase recommendations to the electronic device **20**. For example, the modeling server **40** may send the new purchase recommendations to the electronic device **20** based upon a request from the electronic device. The modeling sever **40** may also send the new purchase recommendations as an email to an email account associated with a given user, the email of which may be retrieved by the electronic device **20**. The modeling server **40** may send the new purchase recommendations in other formats, such as, for example, a short messaging service (SMS) message. The new purchase recommendations may be displayed on the display **13** of the mobile wireless communications device **20**.

Using the Boltzmann model for identification may use an increased amount of resources in the modeling server **40**. This is because an unrestricted Boltzmann model advantageously allows for any factor may be mapped to any variable. Accordingly, it may take the modeling server **40** a relatively longer time period to perform calculations based upon the increased resource usage. Thus, it may be desirable for the modeling server **40** to perform the calculations in a relatively short amount of time. For example, in a relatively large number scenario, it may be increasingly difficult to perform the calculations in a reasonable time period on a single workstation (i.e. a single processor, controller, or computer).

Thus, the calculations, or model identification procedure, may be executed on multiple parallel processors **41a-41n**. This may advantageously distribute the processing load among each of the processors **41a-41n**.

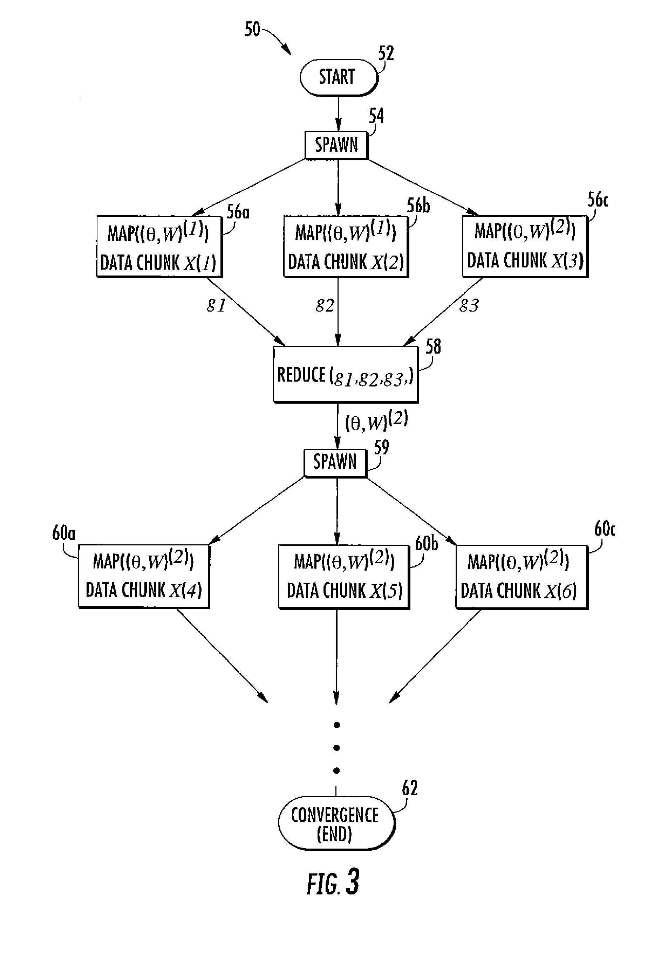

Referring now to the flowchart **50** FIG. 3, starting at Block **52**, a distributed implementation of the model identification procedure on a cluster using the MAP-Reduce Schema may be used. Recall that in equations (6-8), the gradient calculation

$$\hat{\theta} \leftarrow \theta + W\alpha$$

$$\alpha \leftarrow \mathrm{Bernoulli}(\exp(\hat{\theta})/(\exp(\hat{\theta}) + \exp(-\hat{\theta})))$$

$$g_\theta = (x - \theta)$$

$$g_W = M \circ (xx^T - \alpha\alpha^T)$$

is made for each input column, and the gradient g = ($g\theta$, gW) is used to update the parameters θ,W. A sufficient amount of averaging may be achieved by using a small enough €.

However, alternatively, the gradient g may be averaged over several columns (without updating e,w), and then making a single update of θ,W. Since the calculation of the average gradient without updates is a "stateless" calculation, it may be made into parallel MAP operations. As will be appreciated by those skilled in the art, each MAP module may maintain an internal state $\alpha$ from processing one column to the next out of its data chunk, but this state variable is distinct for every MAP module, so there may be no cross communication among the maps, as is typically required by the MAP-REDUCE paradigm. Thus the data matrix X may be partitioned, or spawn, into chunks X (1) , X (2) , X (3) , X (4), ... X (n) at Block **54**. Of these chunks, a number may be chosen for use, for example, three, at a time. Three parallel MAP processes, each given a parameter (θ,W), calculate their own average value of the gradient over the data chunks X(1), X (2) , and X(3), respectively (Block **56**). The gradient values g1, g2, g3 are then gathered at Block **58** by the REDUCE step which combines the gradients to get g = $\frac{1}{3}\Sigma^3_{i=1}$ g$_i$, and then updates the Boltzmann parameters once to obtain:

$$\theta \leftarrow \theta + \in g\theta$$

$$W \leftarrow W + \in gW$$

This new value $(\theta, W)^{(2)}$ may now be used to spawn (Block **59**) a new set of three MAP process that work on the next three chunks X(4), X(5), and X(6), respectively, at Block **60**, and the procedure is repeated. The MAP-REDUCE iteration is continued until convergence is achieved at Block **62**. As before, convergence may occur before all chunks are consumed. In the case where convergence does not happen before all chunks are consumed, the chunks may be recycled.

In particular, the $\in$ used in the MAP-REDUCE scheme above may be much larger than the value used in the column-by-column update of equations 6-8, since a relatively considerable amount of averaging has already been performed in each MAP step and the REDUCE step. Hence the number of MAP-REDUCE iterations may be less than those in the original algorithm, and, moreover, a relatively increased reduction in running time may be obtained, provided the individual MAP steps can run on independent processors **41a-41n**.

As will be appreciated by those skilled in the art, newly arriving data may be incorporated into the model in an online fashion, or sequentially. For example, new purchase data may arrive everyday in the form of extra columns of X. A Hadoop based incremental estimation algorithm may be performed on additional data until convergence. This may have beneficial effects. For example, the daily procedure may have a relatively moderate load since the incremental data may be relatively small, and the convergence may occur relatively quickly because the model may changes marginally in a one day. Additionally, the effect of older data is deprecated, which may be particularly advantageous to track recent buying trends. As will be appreciated by those skilled the art, while a Hadoop based incremental estimation method is performed, other incremental estimation methods may be used and may be performed on other distributed processing platforms.

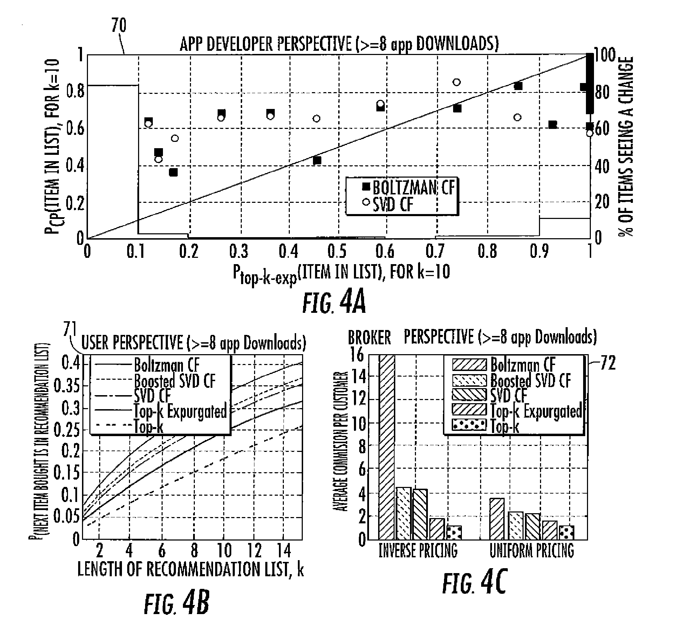

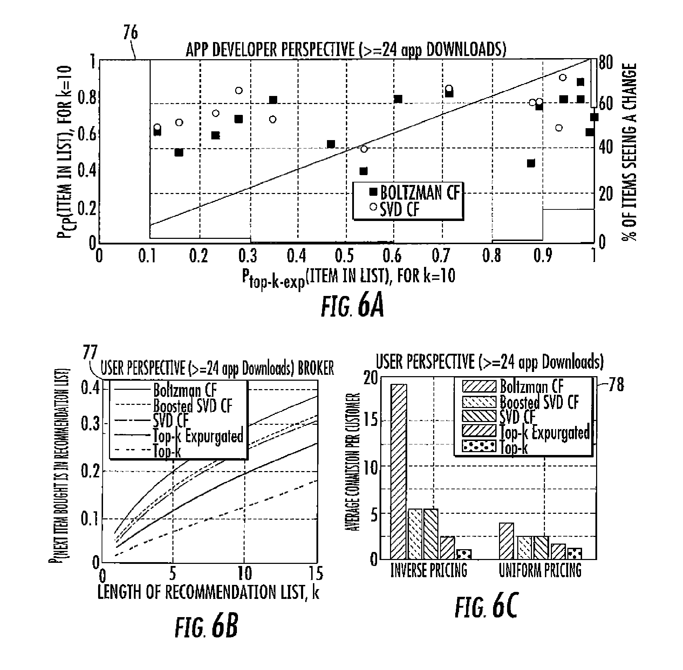

Referring now to the graphs in FIGS. 4a-6c, a comparison of the performance of the various collaborative filtering schemes is illustrated. For comparison, data for application downloads from an online application store for the electronic device **20** is used. The performance metric is the probability P that, in the presented list of L recommendations, the next item bought by the given user is included. For calculating this probability, for each user, one of the items the given user has bought is randomly chosen and removed from his purchase list. The modeling server **40** may then use this modified purchase vector and provide a list of recommendations of length L, and check if the list includes the previously removed item.

The frequency of this event is the estimate of the desired probability. The probability calculation is based upon users of who have made at least p purchases, when p is a parameter that may be chosen. It may be expected that the advantages of the various variants of CF over top-K will be relatively significant as p is made relatively large (i.e. considering users with a sufficiently long download history). In particular, the graphs **70**, **71**, and **72**, respectively illustrate comparative performance for from an application developer's perspective (FIG. 4a), a user's perspective (FIG. 4b), and an application broker or agent's perspective (FIG. 4c). The graphs **70**, **71**, and **72** are based upon a given user who has made at least 8 purchases.

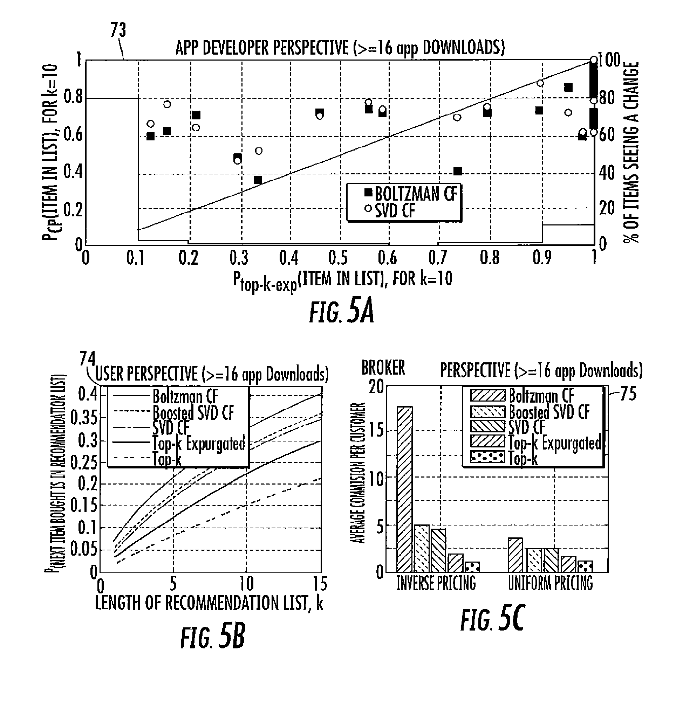

The graphs **73**, **74**, and **75**, respectively illustrate comparative performance for from an application developer's perspective (FIG. 5a), a user's perspective (FIG. 5b), and an application broker or agent's perspective (FIG. 5c) based upon a given user who has made at least 16 purchases. The graphs **76**, **77**, and **78** in FIGS. 6a, 6b, and 6c, respectively, illustrate performance based upon a given user who has made at least 24 purchases.

From the graphs in FIGS. 4-6, the main conclusions that may be drawn include, assuming a recommendation list of length 10, expurgated top-k gives a about a 30% improvement over basic top-k. Singular value decomposition (SVD) CF gives another 20% improvement over expurgated top-k, which amounts to a 70% improvement over basic top-k.

Boosted SVD CF gives a relatively small improvement, in particular, 6%, over SVD CF. However, this may be because the quality of "content" available on the applications in the form of descriptions and reviews is generally not particularly detailed. Performance may improve when content becomes more relevant. For example, user data, i.e. data available to describe the users, may not be available, and having such data to use in processing may also improve performance.

The Boltzmann CF has a relatively sizeable improvement of 20% over SVD CF, and 110% improvement over basic top-k. The improvements in terms of average broker revenue per customer are even more sizeable than from the user perspective (FIGS. 4c, 5c, and 6c). Similarly, from an application developer perspective, many applications that may rarely be recommended under top-k and expurgated top-k, for example, may be recommended an increased amount of times under the collaborative filters. Conversely, a relatively smaller number of popular applications may lose a so visibility, or recommendations. However, overall, there may be an average net improvement. Moreover, popular applications typically do not lose much ranking in terms of download probability even if they do not appear in the recommendation list, because they already are, by definition, quite well known among the user community.

A method aspect is directed to a method of providing new purchase recommendations for a given user associated with an electronic device **20**. The method includes using a modeling server **40** configured to communicate with the electronic device **20** via a communications network **30** to generate a purchase probability distribution using a statistical model based upon prior purchase information for the given user and prior purchase information for a plurality of other users. The method also includes using the modeling server **40** to determine the new purchase recommendations for the given user using the purchase probability distribution. The method also includes using the modeling server **40** to provide the new purchase recommendations to the electronic device **20**.

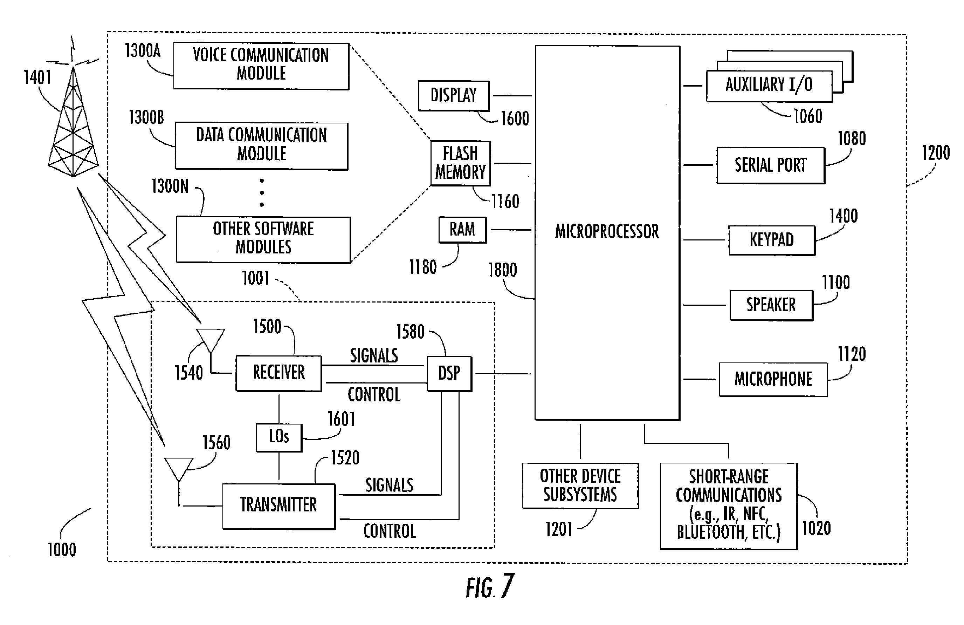

Exemplary components that may be used in various embodiments of the above-described electronic device **20** are now described with reference to an exemplary mobile wireless communications device **1000** shown in FIG. 7. The device **1000** illustratively includes a housing **1200**, a keypad **1400** and an output device **1600**. The output device shown is a display **1600**, which may comprise a full graphic LCD. In some embodiments, display **1600** may comprise a touch-sensitive input and output device. Other types of output devices may alternatively be utilized. A processing device **1800** is contained within the housing **1200** and is coupled between the keypad **1400** and the display **1600**. The processing device **1800** controls the operation of the display **1600**, as well as the overall operation of the mobile device **1000**, in response to actuation of keys on the keypad **1400** by the user. In some embodiments, keypad **1400** may comprise a physical keypad or a virtual keypad (e.g., using a touch-sensitive interface) or both.

The housing **1200** may be elongated vertically, or may take on other sizes and shapes (including clamshell housing structures, for example). The keypad **1400** may include a mode selection key, or other hardware or software for switching between text entry and telephony entry.

In addition to the processing device **1800**, other parts of the mobile device **1000** are shown schematically in FIG. 7. These include a communications subsystem **1001**; a short-range communications subsystem **1020**; the keypad **1400** and the display **1600**, along with other input/output devices **1060**, **1080**, **1100** and **1120**; as well as memory devices **1160**, **1180** and various other device subsystems **1201**. The mobile device **1000** may comprise a two-way RF communications device having voice and data communications capabilities. In addition, the mobile device **1000** may have the capability to communicate with other computer systems via the Internet.

Operating system software executed by the processing device **1800** may be stored in a persistent store, such as the flash memory **1160**, but may be stored in other types of memory devices, such as a read only memory (ROM) or similar storage element. In addition, system software, specific device applications, or parts thereof, may be temporarily loaded into a volatile store, such as the random access memory (RAM) **1180**. Communications signals received by the mobile device may also be stored in the RAM **1180**.

The processing device **1800**, in addition to its operating system functions, enables execution of software applications or modules **1300A-1300N** on the device **1000**, such as software modules for performing various steps or operations. A predetermined set of applications that control basic device operations, such as data and voice communications **1300A** and **1300B**, may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401**. The PIM data items may be seamlessly integrated, synchronized and updated via the wireless network **1401** with the device user's corresponding data items stored or associated with a host computer system.

Communication functions, including data and voice communications, are performed through the communications subsystem **1001**, and possibly through the short-range communications subsystem. The communications subsystem **1001** includes a receiver **1500**, a transmitter **1520**, and one or more antennas **1540** and **1560**. In addition, the communications subsystem **1001** also includes a processing module, such as a digital signal processor (DSP) **1580**, and local oscillators (LOs) **1601**. The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000**. The mobile device **1000** may also be compliant with other communications standards such as GSM, 3G, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore utilizes a subscriber identity module, commonly referred to as a SIM card, in order to operate on a GPRS network.

When required network registration or activation procedures have been completed, the mobile device **1000** may send and receive communications signals over the communication network **1401**. Signals received from the communications network **1401** by the antenna **1540** are routed to the receiver **1500**, which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560**.

In addition to processing communications signals, the DSP **1580** provides for control of the receiver **1500** and the transmitter **1520**. For example, gains applied to communications signals in the receiver **1500** and transmitter **1520** may be adaptively controlled through automatic gain control algorithms implemented in the DSP **1580**.

In a data communications mode, a received signal, such as a text message or web page download, is processed by the communications subsystem **1001** and is input to the processing device **1800**. The received signal is then further processed by the processing device **1800** for an output to the display **1600**, or alternatively to some other auxiliary I/O device **1060**. A device user may also compose data items, such as e-mail messages, using the keypad **1400** and/or some other auxiliary I/O device **1060**, such as a touchpad, a rocker switch, a thumb-wheel, or some other type of input device. The composed data items may then be transmitted over the communications network **1401** via the communications subsystem **1001**.

In a voice communications mode, overall operation of the device is substantially similar to the data communications mode, except that received signals are output to a speaker **1100**, and signals for transmission are generated by a microphone **1120**. Alternative voice or audio I/O subsystems, such as a voice message recording subsystem, may also be implemented on the device **1000**. In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem **1020** may include an infrared device and associated circuits and components, near-field communication (NFC), or a Bluetooth™ communications module to provide for communication with similarly-enabled systems and devices.

Many modifications and other example embodiments of the present disclose will come to the mind of one skilled in the art having the benefit of the teachings presented in the foregoing descriptions and the associated drawings. Therefore, it is understood that the present disclosure is not to be limited to the specific example embodiments disclosed, and that modifications and example embodiments are intended to be included within the scope of the appended claims.

**Claims**

1.  A communications system (10) comprising:

    an electronic device (20) associated with a given user;
    a communications network (30); and
    a modeling server (40) configured to communicate with said electronic device via said communications network, said modeling server also configured to
    generate a purchase probability distribution using a statistical model based upon prior purchase information for the given user and prior purchase information for a plurality of other users,
    determine new purchase recommendations for the given user using the purchase probability distribution, and
    provide the new purchase recommendations to said electronic device.

2.  The communications system of Claim 1,
    wherein said modeling server comprises a plurality of parallel processors (41a-41n) configured to generate a purchase probability distribution using a statistical model.

3.  The communications system of Claim 1,
    wherein the statistical model comprises a statistical model having a factor order greater than or equal to two.

4.  The communications system of Claim 1,
    wherein said modeling server is configured to generate the purchase probability distribution based upon a Boltzmann model.

5. The communications system of Claim 4,
wherein said modeling server is configured to generate the purchase probability distribution based upon an unrestricted Boltzmann model.

6. The communications system of Claim 1,
wherein said modeling server is configured to retrieve prior purchase information for the given user as a random realization.

7. The communications system of Claim 1,
wherein said modeling server comprises a database (42) configured to store the prior purchase information for the given user and the prior purchase information for a plurality of other users.

8. A modeling server (40) configured to communicate with an electronic device (20) associated with a given user via a communications network (30), the modeling server comprising:

at least one processor configured to
generate a purchase probability distribution using a statistical model based upon prior purchase information for the given user and prior purchase information for a plurality of other users,
determine new purchase recommendations for the given user using the purchase probability distribution, and
provide the new purchase recommendations to said electronic device.

9. The modeling server of Claim 8, wherein said at least one processor comprises a plurality of parallel processors (41a-41n) .

10. The modeling server of Claim 8, wherein the statistical model comprises a statistical model having a factor order greater than or equal to two.

11. The modeling server of Claim 8, wherein said at least one processor is configured to generate the purchase probability distribution based upon a Boltzmann model.

12. The modeling server of Claim 8, wherein said at least one processor is configured to retrieve prior purchase information for the given user as a random realization.

13. A method of providing new purchase recommendations for a given user associated with an electronic device (20) comprising:

using a modeling server (40) configured to communicate with the electronic device via a communications network (30) to at least
generate a purchase probability distribution using a statistical model based upon prior purchase information for the given user and prior purchase information for a plurality of other users,
determine new purchase recommendations for the given user using the purchase probability distribution, and
provide the new purchase recommendations to the electronic device.

14. The method of Claim 13, wherein using the modeling server comprises using a plurality of parallel processors (41a-41n) configured to generate a purchase probability distribution using a statistical model.

15. The method of Claim 13, wherein the statistical model comprises a statistical model having a factor order greater than or equal to two.

FIG. 1

APP STORE

We recommend you purchase
- App B
- App A

Wireless Transceiver

Controller

COMMUNICATIONS NETWORK
(CELLULAR, INTERNET

MODELING SERVER

PROCESSOR

° Retrieve prior purchase information for the given user as a random realization
° Generate a purchase probability distribution (factor order $\geq 2$) using a statistical model (Boltzmann, unrestricted) based upon prior purchase information for the given user and prior purchase information for a plurality of other users
° Determine new purchase recommendations for the given user using the purchase probability distribution, and
° Provide the new purchase recommendations to the electronic device

PROCESSOR

PROCESSOR

DATABASE

EP 2 434 446 A1

FIG. 2

FIG. 3

FIG. 4A

FIG. 4B

FIG. 4C

APP DEVELOPER PERSPECTIVE (>=16 app DOWNLOADS)

FIG. 5A

USER PERSPECTIVE (>=16 app Downloads)

FIG. 5B

BROKER PERSPECTIVE (>=16 app Downloads)

FIG. 5C

FIG. 6A

FIG. 6B

FIG. 6C

FIG. 7

**EP 2 434 446 A1**

Europäisches Patentamt
European Patent Office
Office européen des brevets

## EUROPEAN SEARCH REPORT

Application Number

EP 11 17 9757

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités",<br>JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE,<br>vol. 30, no. 11,<br>1 November 2007 (2007-11-01), pages 592-593, XP007905525,<br>ISSN: 0170-9291<br>* The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present application. The notoriety of such prior art cannot reasonably be contested. No documentary evidence was therefore considered required. *<br>----- | 1-15 | INV.<br>G06Q30/00<br><br><br>TECHNICAL FIELDS SEARCHED (IPC)<br><br>G06Q |

The present search report has been drawn up for all claims

| Place of search | Date of completion of the search | Examiner |
|---|---|---|
| The Hague | 30 January 2012 | Moltenbrey, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
     .....................................................................
& : member of the same patent family, corresponding document

EPO FORM 1503 03.82 (P04C01)

**EP 2 434 446 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61386904 B